# EUROPEAN PATENT APPLICATION

(11) **EP 0 945 997 A1**
(43) Date of publication of application: **29.09.1999**
(21) Application number: 98400728.6
(22) Date of filing: 27.03.1998
(51) Int. Cl.: H04B 7/00

(54) **A communications system and a method of power control therefor**

(71) Applicant: MOTOROLA, INC., Schaumburg, IL 60196 (US)
(72) Inventor: Sartori, Philippe, 28000 Chartres (FR); Martinez, Georges, 14000 Caen (FR); Boscovic, Dragan, 78100 St Germain en Laye (FR)
(74) Representative: Joly, Jean-Jacques

(57) **Abstract**

A communications system comprising: a primary terminal in communication with a plurality of secondary terminals, each of the plurality of secondary terminals having an interference related characteristic, and means (210) for determining whether the interference related characteristic of at least two of the plurality of secondary terminals is within a predetermined range, wherein a subset of a domain relating to the transmission technique of the system is assigned to the secondary terminals having the interference related characteristic within the predetermined range.

## Description

### Field of the Invention

The present invention relates to a communications system having a plurality of terminals, for example, a Code Division Multiple Access (CDMA) system or a Time Division Code Division Multiple Access (TD-CDMA) system and a method of power control therefor.

### Background of the Invention

In a cellular telecommunications system having at least one base station and a plurality of mobile stations, the capacity of the system is limited by the interference level in the system. It is known to employ power control techniques in order to reduce the amount of interference in the system. However, while efficient for the up-link, known power control techniques are less efficient for the down-link.

For example, in a CDMA system, the power transmitted by a base station is determined by a mobile terminal which is located geographically farthest from the base station. Consequently, the effective dynamic range of the power control is very limited and does not contribute significantly to the reduction of interference between cells in the system.

It is known to employ pseudo-random frequency and/or time slot hopping to reduce interference. However, the reduction is random and therefore not optimal. Additionally, it is not possible to implement a soft-handoff scheme when using pseudo-random frequency and/or time slot hopping to reduce interference without two independent receivers at either or both the mobile stations and the base station.

It is thus an object of the present invention to obviate or at least mitigate the above described disadvantages.

### Summary of the Invention

According to a first aspect of the present invention, there is provided a communications system comprising: a primary terminal in communication with a plurality of secondary terminals, each of the plurality of secondary terminals having an interference related characteristic, and means for determining whether the interference related characteristic of at least two of the plurality of secondary terminals is within a predetermined range, wherein a subset of a domain relating to the transmission technique of the system is assigned to the secondary terminals having the interference related characteristic within the predetermined range.

It is thus possible to provide a system and method capable of reducing interference in the system.

According to a second aspect of the present invention, there is provided a communications apparatus capable of communicating with a plurality of secondary terminals, each of the plurality of secondary terminals having an interference related characteristic, the apparatus comprising means for determining whether the interference related characteristic of at least two of the plurality of secondary terminals is within a predetermined range, wherein a subset of a domain relating to the transmission technique of the apparatus is assigned to the secondary terminals having the interference related characteristic within the predetermined range.

According to a second aspect of the present invention, there is provided a method of controlling transmission power between a primary terminal and a plurality of secondary terminals, the primary terminal being capable of communicating with the plurality of secondary terminals, each of the plurality of secondary terminals having an interference related characteristic, the method comprising the steps of: determining whether the interference related characteristic of at least two of the plurality of secondary terminals is within a predetermined range, and assigning a subset of a domain relating to the transmission technique of the apparatus to the secondary terminals having the interference related characteristic within the predetermined range

Other, preferred, features and advantages are set forth, and will become apparent from the dependent claims and the following description and drawings.

### Brief Description of the Drawings

The invention will now be described in more detail, by way of example, with reference to the accompanying drawings, in which:
FIG. 1 is a schematic diagram of a part of a communications system;

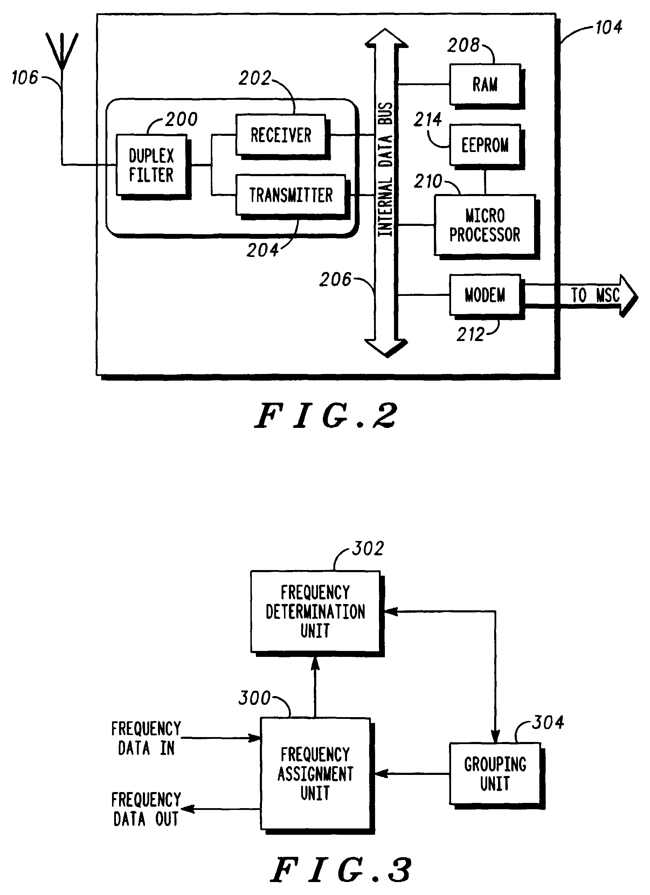

FIG. 2 is a schematic diagram of an apparatus constituting an embodiment of the invention;
FIG. 3 is a schematic diagram of functional units of FIG. 2;
FIG. 4 is a schematic diagram of frequency allocations used with the embodiment of FIG. 2 and 3;
FIG. 5 is a graph of cell radius v. maximum number of simultaneous codes for the frequency allocation of FIG. 4;
FIG. 6 is a flow diagram of a method for use with the apparatus of FIG. 2;
FIG. 7 is a schematic diagram of frequency allocations constituting another embodiment of the invention, and
FIG. 8 is a graph of cell radius v. maximum number of simultaneous codes for the embodiment of FIG. 7.

### Description of a Preferred Embodiment

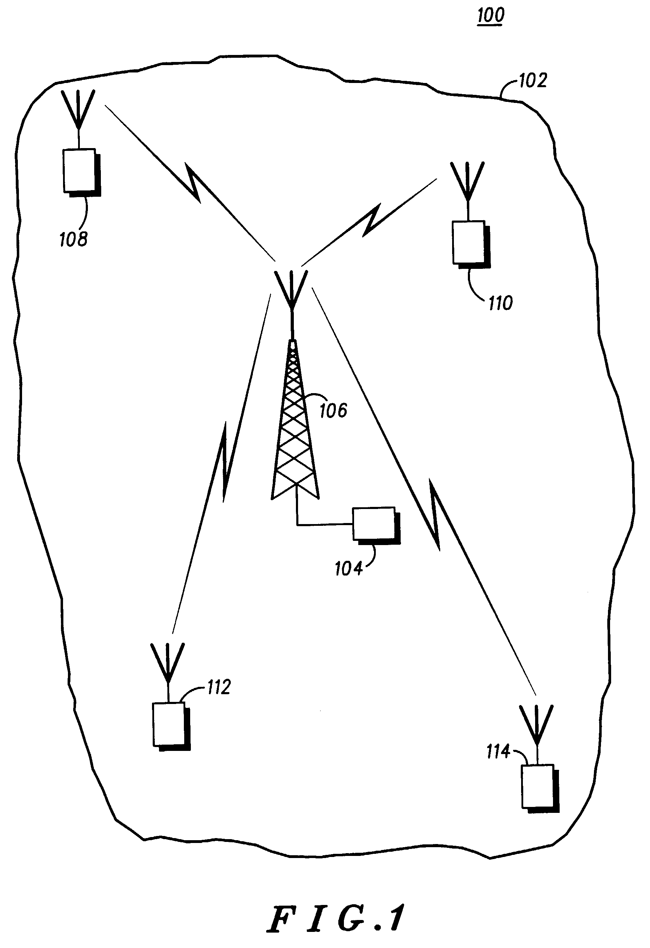

Referring to FIG. 1, a CDMA cellular telecommunications system 100 comprises at least one geographical coverage area 102 supported by at least one base station 104. An example of the at least one base station 104, is a base station from the SC series of base stations, for example an SC9600 base station, manufactured by Motorola, Inc., with appropriate adaptations in accordance with the examples set forth below.

A first mobile terminal, or handset 108, a second mobile terminal, or handset 110, a third mobile terminal, or handset 112, and a fourth mobile terminal, or handset 114 are located within the geographical coverage area 102 and are in communication with the base station 104. An example of the first, second, third or fourth handset 108, 110, 112, 114 is a MicroTAC® SC-725 cellular telephone manufactured by Motorola, Inc.

The at least one base station 104 comprises an antenna 106 coupled to a duplexer 200, for example a Time Division Duplex (TDD) or a Frequency Division Duplex (FDD) duplexer, the duplexer 200 being coupled to a receiver 202 and a transmitter 204. The receiver 202 and the transmitter 204 are coupled to an internal data bus 206, the internal data bus 206 being coupled to a Random Access Memory (RAM) 208, a microprocessor 210 and a modem 212.

The microprocessor 210 is coupled to an Erasable Electronic Programmable Read Only Memory (EEPROM) 214 and the modem 212 is coupled to a Mobile services Switching Centre (MSC) (not shown).

The microprocessor 210 comprises (either in hardware or software), or is coupled to, a frequency assignment unit 300 capable of receiving, assigning and providing data corresponding to a frequency assigned to active handsets. An active handset is a handset which needs to communicate with or via the base station 104. The frequency assignment unit 300 is coupled to a frequency determination unit 302 for determining the frequency assigned to the active handsets. The frequency determination unit 302 is coupled to a grouping unit 304 for grouping, or clustering, the active handsets exhibiting a pre-defined criteria, for example a bit error rate, a receive signal strength, a path loss, a geographical distance or a signal to noise ratio, to a given carrier frequency fᵢ, i.e. assigning a predetermined carrier frequency to active handsets having transmit powers within a certain range. The grouping unit 304 is coupled to the frequency assignment unit 300.

The base station 104 is capable of transmitting within a spectrum band consisting of N carrier frequencies: f₁, f₂, ..., f_{N}. In the geographical coverage area 102, there are, at any one time, a number of active handsets, denoted as P, for example, the first, second, third and fourth handsets 108, 110, 112, 114. In order to identify the handsets more clearly, the first, second, third and fourth handsets 108, 110, 112, 114 will be referred to using the nomenclature: handset_{I}, i.e. the first handset 108 is handset₁, the second handset 110 is handset₂, and so on. The respective associated power level used by the base station 104 to transmit to the handset_{I}, is TX_{I}.

A frequency is allocated to a range of transmit powers, thus fᵢ is allocated for use by handsets having a transmit power within the lower and upper transmit power limits, Boundᵢ and Boundᵢ₊₁, respectively.

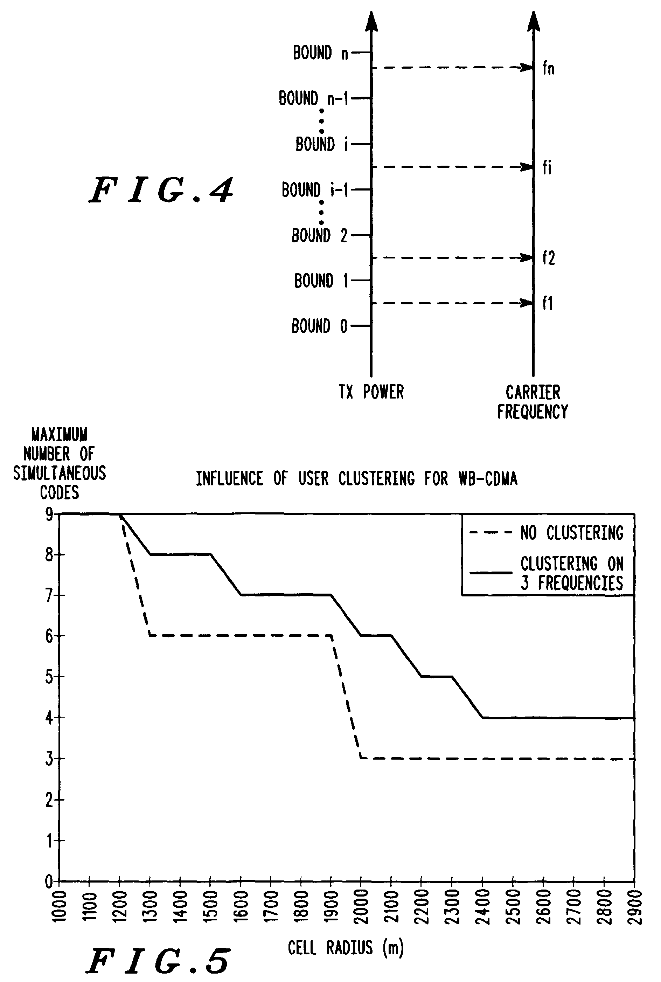

Thus, if a given handset, handset_{J} is transmitting at a given power level TX_{J}, and the power level TX_{J} falls within a power range having lower and upper limits of Boundᵢ and Boundᵢ₊₁, handset_{J} is assigned a carrier frequency fᵢ. FIG. 4 shows more fully the correspondence between the transmit power ranges and the frequencies allocated thereto.

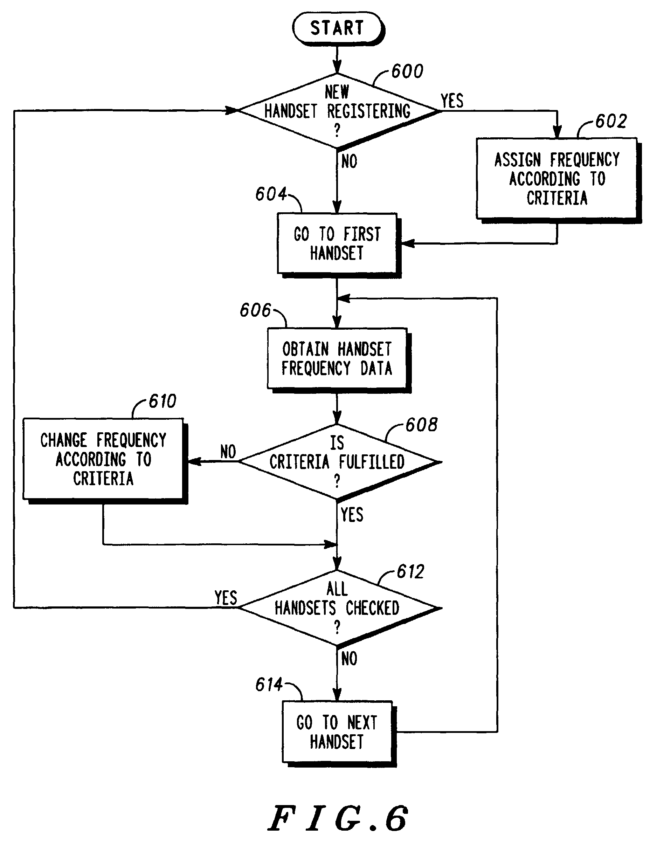

A simulation for a Wideband-CDMA system, for example of the type described in ETSI Tdoc SMG2 431/97 entitled "Concept Group Alpha - Wideband Direct-Sequence CDMA, System Description Summary", is shown in FIG. 5. The solid line shows the capacity of the system when the above technique is employed, in terms of simultaneous codes usable, in relation to distance from the base station 102 in metres. The broken line shows the same data, but when the handsets are grouped, or clustered, according to the technique described above.

Normal operation of the above example will now be described with reference to FIG. 6. It is assumed, for the purpose of clarity of description, that P active handsets are already registered with the system 100.

The grouping unit 304 determines when a new handset has registered with the system 100 (step 600). When a new handset has registered, a carrier frequency fᵢ is assigned (step 602) to the handset depending upon within which range the transmit power of the new handset lies, in accordance with the technique described above. If a new handset is not trying to register with the system 100 or has registered and already been assigned the carrier frequency fᵢ, the first of the P active handsets is selected by the grouping unit 304 (step 604) and the frequency determination unit 302 is instructed to obtain, via the frequency assignment unit 300, the data relating to the current carrier frequency, fᵢ, used by the first of the P active handsets (step 606), handset₁. Once obtained, the data relating to the current carrier frequency, f₁, used by the first of the P active handsets is analysed by the grouping unit 304 to determine whether the current carrier frequency, f₁, conforms to the chosen criteria, for example and as described above, whether the current carrier frequency, f₁, of the first of the P active handsets is appropriate for the power range within which the first of the P active handsets is transmitting (step 608).

Whether or not the carrier frequency, fᵢ, used is appropriate can change as the P active handsets move within the coverage area 102, since movement of each of the P active handsets will necessitate the use of a higher or lower associated transmit power for each of the P active handsets. Consequently, as the transmit power changes for each of the P active handsets, the transmit power range within which each of the P active handsets lies will change as well.

If the first of the P active handsets is transmitting at a first power level which does not lie within the range of transmit power levels allocated by the system to the current carrier frequency, f₁, the grouping unit 304 instructs the frequency assignment unit 300 to assign a new carrier frequency to the first of the P active handsets corresponding to the power range Boundᵢ, Boundᵢ₊₁ within which the first of the P active handsets is transmitting (step 610). Once the above frequency allocation has been made, or in the case where the first of the P active handsets is found to be transmitting on the correct carrier frequency allocated for transmissions at the power level used by the first of the P active handsets, the grouping unit 304 determines whether all of the P active handsets have been analysed (step 612). If all of the P active handsets have been analysed, the above method is reinitiated. Otherwise, the next handset is selected (step 614) and the method is repeated for the next handset from step 606 onwards.

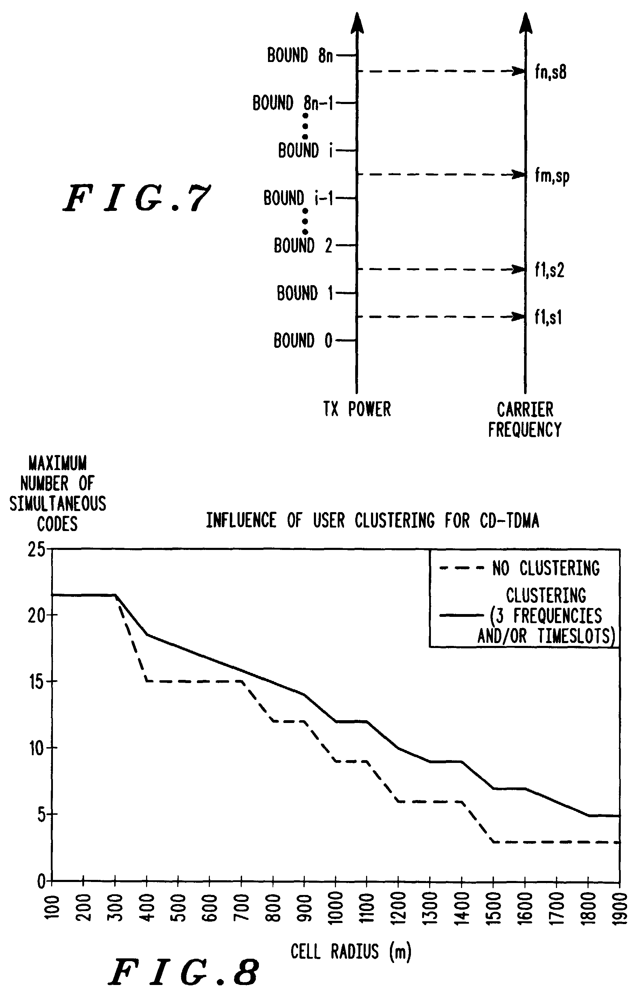

In other embodiments of the present invention, the clustering can be either in the frequency domain, the time domain or both, i.e. by frequency, time slot, or a combination. For example, in a TDMA system having a frame consisting of 8 time slots and N available carriers, it is possible to cluster handsets into 8N ranges. An example of such a combined frequency and time slot clustering is shown in FIG. 7. In practice, this limit will be lower if multi-slot transmission techniques are employed.

The above frequency clustering technique can be applied to a Time Division-Code Division Multiple Access (TD-CDMA) system. It is thus also possible to cluster the handsets in time by exploiting the slotted structure of the TD-CDMA system. Even if only a single frequency is available, it is still possible to reduce inter-call inteference using time slot clustering. Simulation results (FIG. 5) for a Wideband-TDMA/CDMA system, for example of the type described in ETSI Tdoc SMG2 434/97 entitled "Concept Group Delta - WB-TDMA/CDMA: System Description Summary", show an increase in cell capacity.

In a further embodiment of the invention, the clustering can be in the direct sequence domain. In a CDMA system having a predetermined number of direct sequence spreading codes, a first set of the direct sequence spreading codes can be used to cluster a first set of handsets exhibiting one or more of the above-mentioned pre-defined criteria. A second set of direct sequence spreading codes can also be used to cluster a second set of handsets exhibiting the one or more of the pre-defined criteria, but where the value of the pre-defined criteria is in a different range. The first and second set of direct sequence spreading codes can be orthogonal.

## Claims

1. A communications system comprising: a primary terminal in communication with a plurality of secondary terminals, each of the plurality of secondary terminals having an interference related characteristic, and means for determining whether the interference related characteristic of at least two of the plurality of secondary terminals is within a predetermined range, wherein a subset of a domain relating to the transmission technique of the system is assigned to the secondary terminals having the interference related characteristic within the predetermined range.

2. A system as claimed in Claim 2, further comprising means for controlling the transmission power between the primary unit and the secondary units assigned to the subset of the domain relating to the transmission technique.

3. A system as claimed in any one of the preceding claims, wherein domain relating to the transmission technique is the time domain.

4. A system as claimed in Claim 3, wherein the subset is a time slot.

5. A system as claimed in any one of Claims 1 to 4, wherein the domain relating to the transmission technique is the frequency domain.

6. A system as claimed in Claim 5, wherein the subset is a frequency channel.

7. A system as claimed in any one of the preceding claims, wherein the domain relating to the transmission technique is the direct sequence domain.

8. A system as claimed in Claim 7, wherein the subset is a first set of direct sequence spreading codes.

9. A system as claimed in Claim 8, wherein the first set of direct sequence spreading codes is substantially orthogonal to a second set of direct sequence spreading codes.

10. A system as claimed in any one of the preceding claims, wherein the system is arranged to frequency hop.

11. A system as claimed in any one of the preceding claims, wherein the system is arranged to time slot hop.

12. A system as claimed in any one of the preceding claims, wherein the interference related characteristic is a bit error rate.

13. A system as claimed in any one of the preceding claims, wherein the interference related characteristic is a receive signal strength.

14. A system as claimed in any one of the preceding claims, wherein the intererence related characteristic is a path loss.

15. A system as claimed in any one of the preceding claims, wherein the interference related characteristic is a geographical distance.

16. A system as claimed in any one of the preceding claims, wherein the interference related characteristic is a signal to noise ratio.

17. A method of controlling transmission power between a primary terminal and a plurality of secondary terminals, the primary terminal being capable of communicating with the plurality of secondary terminals, each of the plurality of secondary terminals having an interference related characteristic, the method comprising the steps of:
determining whether the interference related characteristic of at least two of the plurality of secondary terminals is within a predetermined range, and
assigning a subset of a domain relating to the transmission technique of the apparatus to the secondary terminals having the interference related characteristic within the predetermined range.

18. A communications apparatus capable of communicating with a plurality of secondary terminals, each of the plurality of secondary terminals having an interference related characteristic, the apparatus comprising means for determining whether the interference related characteristic of at least two of the plurality of secondary terminals is within a predetermined range, wherein a subset of a domain relating to the transmission technique of the apparatus is assigned to the secondary terminals having the interference related characteristic within the predetermined range.

19. A base station comprising the communications apparatus of Claim 18.

20. A communications terminal comprising the communications apparatus of Claim 18.
